(19) Europäisches Patentamt
European Patent Office
Office européen des brevets

(11) **EP 3 434 579 B1**

(12) **EUROPEAN PATENT SPECIFICATION**

(45) Date of publication and mention
of the grant of the patent:
**06.11.2019 Bulletin 2019/45**

(51) Int Cl.:
**B63C 11/22** *(2006.01)* **G05D 16/00** *(2006.01)*

(21) Application number: **18178975.1**

(22) Date of filing: **21.06.2018**

(54) **PRESSURE REGULATOR DEVICE**

DRUCKREGLER

DÉTENDEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2017 IT 201700085596**

(43) Date of publication of application:
**30.01.2019 Bulletin 2019/05**

(73) Proprietor: **Mares S.p.A.**
**16035 Rapallo (GE) (IT)**

(72) Inventor: **ANGELINI, SERGIO**
**16035 RAPALLO (GE) (IT)**

(74) Representative: **Karaghiosoff, Giorgio Alessandro**
**c/o Praxi Intellectual Property S.p.A. - Savona**
**Via F. Baracca 1R, 4° piano**
**"Il Gabbiano"**
**17100 Savona (IT)**

(56) References cited:
**EP-A1- 1 382 524     FR-A1- 2 774 062**
**FR-A1- 2 873 778     US-A- 5 139 046**

• **Anonymous: "How to choose the right regulator? | Bad Fish", , 31 October 2016 (2016-10-31), XP055458186, Retrieved from the Internet: URL:https://web.archive.org/web/2016103110 5351/http://www.badfishdivers.com/how-to-c hoose-the-right-regulator/ [retrieved on 2018-03-09]**

**Description**

Object of the present invention is a pressure regulating device, specifically a pressure regulating device for the first reduction stage in the two-stage underwater breathing apparatuses.

Two-stage devices for regulating pressure and dispensing air are known, for example for underwater use, wherein the first pressure reducing stage is connected to a breathable high pressure gas source, such as a cylinder normally loaded to 200-300 bars, and is adapted to reduce said pressure to a predetermined intermediate pressure.

Usually said first pressure reducing stage comprises a body provided with an inlet connected to a breathable high pressure gas source and an outlet for the breathable gas having pressure lower than the input gas pressure, said body being partitioned into at least one high-pressure gas chamber communicating with said inlet, and an intermediate-pressure gas chamber connected with said outlet, and the intermediate-pressure gas chamber being communicating with the high-pressure gas chamber through a pressure reducing valve.

Said pressure reducing valve comprises a valve seat which separates the high pressure chamber from the intermediate pressure chamber cooperating with a cut-off, with a flared head connected to a stem, so called plunger cut-off.

Said cut-off is housed inside the high pressure chamber and can be axially displaced, i.e. in a direction parallel to its longitudinal axis, alternately in the two directions, inside said high pressure chamber, whereby the flared head alternatively travels to be detached and moved away from the valve seat and travels to move closer and in abutment against said valve seat.

The stem is connected with an elastically deformable diaphragm having a wall facing a chamber communicating with the external environment and on which an elastic pre-load acts such that the pressure of the external environment and the elastic pre-load cause an inflection of the diaphragm itself in the opening direction of the dispensing valve at the inhaling.

In its simplest configuration, the cut-off is pushed along the closing direction by the input flow pressure and by an elastic pre-load that is in the high pressure chamber and acts in the opposite direction with respect to the diaphragm elastic pre-load.

When the intermediate pressure is lower than a given threshold, the summation of the forces acting in the opening direction of the valve prevail on those acting in the opposite direction and the valve gets open.

Since the high pressure input fluid comes from a cylinder, the pressure acting to close the valve is variable depending on the filling level of the cylinder itself. This makes the available intermediate pressure outputting to the stage not optimal.

In order to compensate for this drawback the solution is known of making an axial hole in the cut-off such to lead the gas flow intended to be dispensed into the guide hole housing the cut-off stem. In fact in this way, an intermediate pressure area is created and able to balance the forces involved and to ensure an intermediate pressure whose value does not depend on the cylinder pressure.

Despite achieving the object, this solution has the following drawback. The guide hole is obtained in the high pressure chamber by means of gaskets such as o-rings or the like. In case of leakage by the gasket or the o-ring, this would result in high pressure fluid leakage inside the balancing chamber and, through the axial hole in the cut-off, in the intermediate pressure chamber. The second stage receiving breathable gas from the first stage is usually a so-called downstream valve, that is a valve where the intermediate pressure acts to open the valve itself. If the intermediate pressure increases due to a leakage from the balancing chamber, the second stage holds on until it can and afterwards it starts passing air, which can vary from the small leakage to the "catastrophic failure" of uncontrolled leak of breathable gas, with its obvious implications.

A solution of this type is known by document FR2774062. As it is clearly evident by figures, the proposed solution, shown in detail in figure 1, shows a plunger cut-off whose stem had a hole for housing a rod denoted by 109, while the end of the stem opposite to the valve seat denoted by 112 has an extension of the hole for housing the rod, the extension opening into the balancing chamber denoted by 113, thus communicating the balancing chamber with the intermediate pressure chamber denoted by 102. The device according to FR2774062 has therefore a structure which suffers from the drawbacks of the known art.

An additional known device is described at the web pages www.badfishdivers.com/how-to-choose-the-right-regulator/. In this publication a first stage is shown, wherein the plunger cut-off stem does not sealingly slide in the seat ending with the balancing chamber and therefore the latter communicates with the high pressure chamber, as clearly indicated by the air dark blue color denoting the high pressure areas, whereas the intermediate pressure ones are shown in blue. A further solution shows a connection between the balancing chamber and the intermediate pressure chamber instead, therefore configuring a solution functionally similar to the afore described one with reference to the document FR2774062.

In both cases, due to the balancing chamber not being sealingly closed or however not being able to be sealingly closed, the shown solutions have the previously described drawbacks and are not suitable to overcome the problem the present invention is based on.

Object of the present invention is to implement a pressure reducing valve which is free from this drawback.

A further object of the present invention is to implement a reducing valve which is reliable, easy to implement and cheap.

The invention as claimed achieves the objects with a pressure regulating device, such as a first diaphragm stage for underwater use, the device comprising a body provided with an inlet connected to a breathable high pressure gas source and an outlet for the breathable gas having pressure lower than the input gas pressure, said body being partitioned into at least one high-pressure gas chamber communicating with said inlet, and an intermediate-pressure gas chamber communicating with said outlet, and the intermediate-pressure gas chamber being communicating with the high-pressure gas chamber through a pressure reducing valve.

The pressure reducing valve comprises a valve seat made on the wall partitioning the high pressure chamber from the intermediate pressure chamber and a cut-off composed of a flared head connected to a stem, the flared head cooperating with said valve seat for closing and opening said valve.

The cut-off is displaceable in the two directions along the longitudinal axis of the stem inside the high pressure chamber such that the flared head travels to be alternatively detached and moved away from said seat for opening the valve and travels to move closer and in abutment against said valve seat for closing the valve.

The stem is slidingly and sealingly supported in a so-called balancing chamber inside the high pressure chamber, opposite to the wall provided with said valve seat, thanks to a sealing gasket, such as an o-ring or the like, said opening not communicating with other parts of the device such that the pressure in said chamber is substantially the ambient pressure during the assembly, and such to not affect the thrust exerted by the cut-off against the valve seat. The balancing chamber defines the area behind the cut-off, with reference to the displacement direction of the cut-off in the closing position of the high pressure chamber towards the intermediate pressure chamber and this terminology is used alternatively with balancing chamber in the following.

Thanks to this, in case the sealing element has a malfunction and, therefore, the high pressure flows into the balancing chamber, the obtained effect is the reduction of the intermediate pressure since the pressure behind the cut-off contributes to push the cut-off itself towards the position closing the passage between the high pressure chamber and the intermediate pressure chamber. This results in an intermediate pressure value lower than the nominal one being required in order to obtain the closing. The reduction of the intermediate pressure is proportional to the cylinder pressure and causes worsening of performance, but it has to be seen as an alternative to the above described catastrophic failure. In fact in the afore said condition, the diver has a second stage operating a little less well as regard to the breathing air feed, alternatively however to having a second stage uncontrollably dispensing breathable gas. Upon this leakage, the first stage dispenser has to be checked and tested, but the immersion during which the problem occurs can be carried out with less difficulty than the alternative case according to the state of the art.

An alternative embodiment provides the use of a relief valve communicating the rear area of the cut-off with the external environment in order to mitigate the high pressure thrust effect in the direction of closing the cut-off.

In an embodiment, the relief valve can advantageously be an automated valve calibrated to get opened when the pressure inside the balancing chamber is higher than a given threshold. The threshold can even be null, i.e. the area under to cut-off is permanently communicating with the external environment. This would cause, in case of high pressure gas passage beyond the balancing chamber gasket, a leakage of bubbles from the first stage without any pressure build up under the cut-off.

Alternatively or in combination according to a further exemplary embodiment, the use of a manually operable relief valve can also be provided such that the diver can reduce the pressure exerted on the cut-off in the valve closing direction when he/she considers that this is too high for his/her breathing capabilities.

These and other characteristics and advantages of the present invention will be more evident from the following description of some exemplary embodiments depicted in the attached drawings wherein:

Fig. 1 shows a longitudinal section of a pressure regulating device, specifically a first diaphragm stage for underwater use with lateral high pressure gas inlet according to an embodiment of the invention.
Fig. 2 shows an enlargement of the preceding figure with the highlighted forces acting on the cut-off in the direction of closing and opening the same.
Fig. 3 shows the intermediate pressure Pi trend by varying the immersion depth in a device according to known art.
Fig. 4 shows the same curve as Fig. 3 with a superimposed curve obtained with the device according to the invention.
Fig. 5 shows the trend of the intermediate pressure/depth curves with overall O-ring leakage for different pressure values of the cylinder.

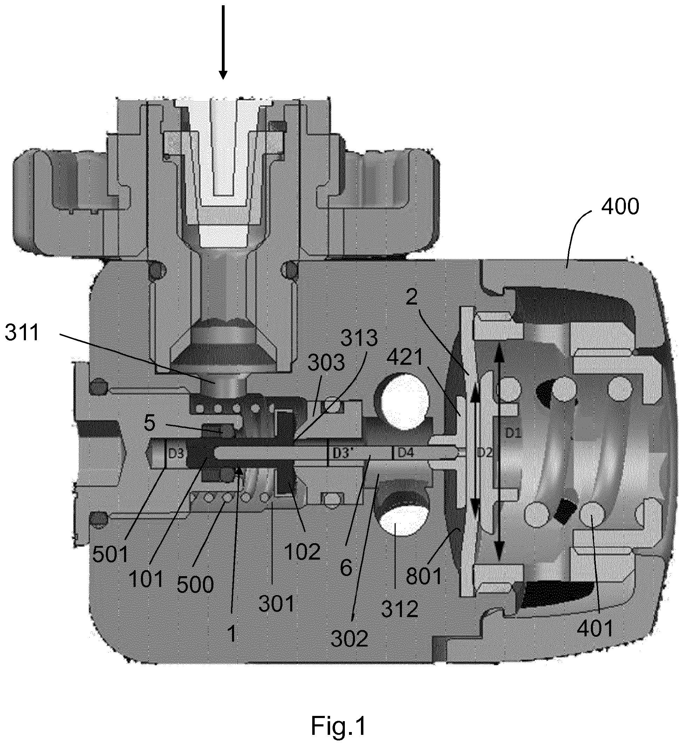

With reference to figure 1, the pressure regulating device provides a main body partitioned in at least one high pressure chamber 301 having an inlet for the high pressure gas 311 and a lower pressure chamber, so-called intermediate pressure chamber 302, with an outlet of the reduced pressure gas 312.

The high pressure chamber 301 is partitioned from the intermediate pressure chamber 302 by a valve seat 313 made on the partitioning element 303 of said high pressure chamber 301 from said intermediate pressure chamber 302, which seat 313 cooperates with a plunger cut-off 1, also called poppet in the present description. This moves inside the high pressure chamber 301 along a longitudinal axis of said high pressure chamber 301, traveling alternatively to be detached and moved away from said seat 313 for opening the valve and traveling to move closer and in abutment against said valve seat 313 for closing the valve.

A guide element to guide the axial movement of the cut-off 1 inside said high pressure chamber 301 can be provided.

The cut-off 1 is composed of a stem 101 connected to a radially flared head 102 with respect to said stem 101, preferably made in one piece. The flared head 102 has a side facing the valve seat 313 and a rear side opposite to the valve seat 313 and to the approaching direction of the cut-off 1 to said seat.

The cut-off 1 is constituted by hard material resistant to high pressures, such as metal or the like, with a relatively soft surface where it interfaces with the sealing surface, i.e. with an annular lip of the valve seat.

The valve seat 313 is composed of an opening made on the partitioning element 303 partitioning said high pressure chamber 301 from said intermediate pressure chamber 302, the opening having an annular sealing lip of rigid material and with a pointed ridge that can cooperate with the upper surface of the flared head 102 of the plunger cut-off 1 such to ensure a perfect sealing of said seat 313 when the cut-off 1 is in closing position.

The plunger cut-off 1 has in its inside a blind hole, specifically coaxial with the stem and the flared head 102 and axially crossing the flared head 102 and the stem 101 until a given depth such as to create a housing seat of a thrust shaft 6 constituting the mechanism actuator.

The end of the stem 101 opposite to the flared head 102 is therefore completely closed towards the balancing chamber 501, i.e. it has a solid cross section.

The end of the stem 101 opposite to the flared head 102 is sealingly and slidingly supported in a balancing chamber 501 made in a wall opposite to the wall with the valve seat 313 thanks to a gasket element 5, such as an o-ring or the like, provided for insulating said opening.

The bottom of the high pressure chamber 301 is a supporting base of a resilient element 500 such as a spring adapted to push the cut-off 1 against the valve seat in closed condition, during the operation of the pressure regulating device.

According to an embodiment, as shown in figure 1, said wall opposite to the valve seat 313 consists of a plug closing the high pressure chamber 301, which plug is screwed in a threaded ending length of said high pressure chamber. The seal is obtained thanks to an o-ring and the side facing the inside of the high pressure chamber has a notch, in particular coaxial with the stem 101 of the cut-off 1 forming the balancing chamber 501.

The thrust shaft 6 ends in the inflection chamber 801 where it is coupled with the disc 421 resting on an elastically deformable diaphragm 2 having a wall facing a chamber communicating with the external environment and on which an elastic pre-load 401 acts such that the pressure of the external environment and the elastic pre-load cause an inflection of the diaphragm 2 itself in the opening direction of the dispensing valve at the inhaling, i.e. in the direction away from the cut-off 1 of the valve seat 313.

As it is known, in fact, in the first diaphragm pressure reduction stages for underwater use, whose function is to reduce the incoming air (i.e. the pressure of the cylinder to which the first stage is connected) to a predetermined intermediate pressure plus the ambient pressure, the air requirement by the diver creates a depression inside the intermediate pressure chamber 302, which depression causes the deformation of the elastic diaphragm 2. The thrust shaft 6 transfers the motion of the diaphragm 2 to the valve mechanism, i.e. to the cut-off 1. Therefore, when air is required, the cut-off 1 is removed from the valve seat 313 and allows the gas to flow from the high pressure chamber 301 connected to the cylinder, towards the intermediate pressure chamber 302 and therefore towards the user, through the outlet 312. When the diver is not inspiring, a balance condition of the forces due to the pressures and the elastic elements, i.e. to the springs, is set such that the cut-off 1 is hold in abutment and sealed against the valve seat 313 and the valve remains closed.

By denoting with D1 the diameter of the diaphragm 2, with D4 the diameter of the thrust shaft 6, with D3' the diameter of the hole obtained in the partitioning element 303 between the intermediate pressure chamber 302 and the high pressure chamber 301 inside which the thrust shaft is inserted, and with D3 the inner diameter of the balancing chamber 501, the equation expressing the balance of the forces acting on the cut-off 1 can be written in a first approximation such to highlight the characterizing feature of the invention.

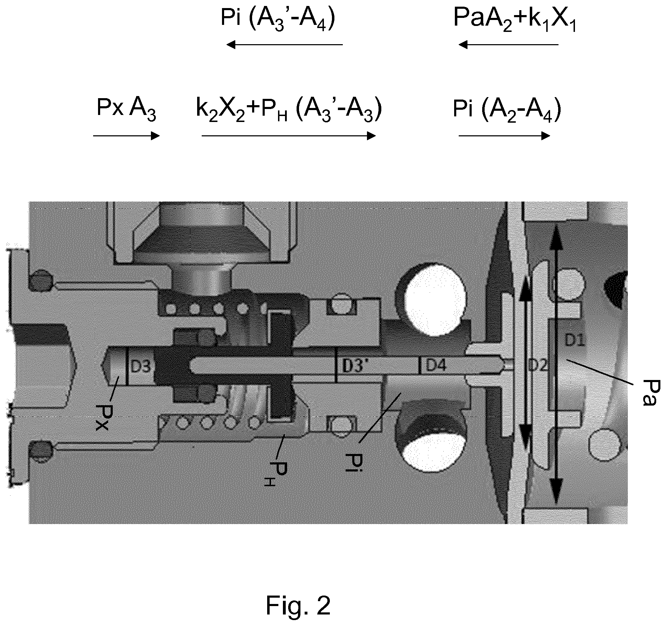

By denoting with $A_1$, $A_3$, $A_3'$, $A_4$ the surfaces corresponding to the diameters D1, D3, D3' and D4, with Pi the output pressure from the intermediate pressure chamber 302, $P_H$ the input pressure to the high pressure chamber 301, Pa the ambient pressure, Px the pressure in the balancing chamber acting on the end of the stem 101 of the cut-off opposite to the valve seat 313, $k_1$ the modulus of the spring 401, $X_1$ the compression with respect to the balance position of the spring 401, $k_2$ the modulus of the spring 500, $X_2$ the compression with respect to the balance position of the spring 500, as shown in Fig. 2, in the cut-off opening direction, the following forces are acting:

EP 3 434 579 B1

1) Pa*α*$A_1$
2) $k_1$*$X_1$
3) Pi*($A_3$'-$A_4$)

Where α is a geometrical reduction factor which is function of D1, D2 as well as of the mechanical properties of the diaphragm 2. For simplicity, let's replace with $A_2$.
While in the cut-off closing direction the following forces act:

1) Px*$A_3$
2) $P_H$*($A_3$'-$A_3$)
3) $k_2$*$X_2$
4) Pi*($A_2$-$A_4$)

From which it is obtained

$$k_1 X_1 + PaA_2 + Pi(A_3'-A_4) = Pi(A_2 - A_4) + P_H(A_3'-A_3) + PxA_3 + k_2 X_2$$

(1)

By denoting with kX=$k_1 X_1$-$k_2 X_2$ and simplifying we obtain

$$Pi(A_2 - A_3') = kX + PaA_2 - P_H(A_3'-A_3) - PxA_3 \quad (2)$$

For what till now mentioned, there are various possible values of Px:

- Px = Pi is the known art as described already;
- Px = 0 or atmospheric pressure during the assembling step: it is the easiest embodiment object of the invention;
- Px = Pa: the area behind the cut-off, i.e. the rear end of the stem 101 in the balancing chamber 501 is in contact with the external environment;
- Px = Pa + 15bars: is the condition wherein a relief valve is provided, which opens when a threshold value for example of 15 bars is reached.

This equation underpins the choice in the devices according to known art of piercing the cut-off such to bring the intermediate pressure to the balancing chamber 501, i.e. on the head side of the end of the stem 101 of the cut-off 1 which is opposite to the valve seat 313, or more generally in the area behind the cut-off with reference to the approaching direction of said cut-off 1 to the valve seat 313. In this case, in fact, Px = Pi thereby the equation (2) takes the form

$$Pi = \frac{PaA_x - P_H(A_3'-A_3)}{A_2 - A_3'+A_3} + \frac{kX}{A_2 - A_3'+A_3} \quad (3)$$

If $A_3$ is kept as equal as possible to $A_3$', not only the high pressure coming from the cylinder does not affect the outlet, but also the intermediate pressure has a trend linear with the external pressure by being:

$$Pi = Pa + k'X \quad (4)$$

Where k'=k/$A_2$. By calibrating the springs such that k'X is 10 bars, a difference between intermediate pressure and ambient surface pressure is obtained equal to 10 bars, which represents the optimal value for this typology of devices and especially such a value does not depend on the immersion depth and the cylinder pressure.
Actually the surfaces $A_3$ and $A_3$' can hardly be considered equal due to the unavoidable tolerances and, especially, to the valve geometry wherein the dome configuration of the valve seat causes the effective surface on which the high pressure acts being different on the rear face from the one acting on the front face of the flared head 102, also in case of perfect matching between the diameter of the cut-off 101 and the diameter of the hole of the partitioning element 303 between the intermediate pressure chamber 302 and the high pressure chamber 301.

By way of example, from eq. (3) it can be verified as, by assuming a typical value for $A_2$ equal to $30A_3$, a difference of 10% between $A_3'$ and $A_3$, i.e. $A_3'=1.1A_3$, results in a change of the intermediate pressure Pi from 0.6 to 0.15 bars for changes of the cylinder pressures $P_H$ from 200 to 50 bars, which is a negligible value, thereby in practice we can consider $A_3'=A_3$ and simplify the equation of force balance, taking this fact into account.

In contrast to the theory, the inventor realized that by making the poppet blind, i.e. not allowing the intermediate pressure to flow to the rear of the cut-off, performance comparable to that of the regulator devices according to known art can be obtained.

In this case Px takes the 0 value, therefore the eq. 2 becomes:

$$Pi(A_2 - A_3') = kX + PaA_2 - P_H(A_3'-A_3) \quad (5)$$

If $A_3 = A_3'$, we obtain

$$Pi = Pa\frac{A_2}{A_2 - A_3} + k'X \quad (6)$$

Where $k'=k/(A_2-A_3)$. By calibrating the springs such that k'X takes the same value seen above (for example 10 bars), an increase in the intermediate pressure with depth is obtained which is penalized by the factor $A_2/(A_2-A_3)$ which, by taking $A_2 = 30A_3$, is equal to about 1.03. This means that, in ideal conditions of balanced poppet i.e. with $A_3' = A_3$, the blind hole always ensures a trend linear with the external pressure, but with an increase of about 3% of the angular coefficient.

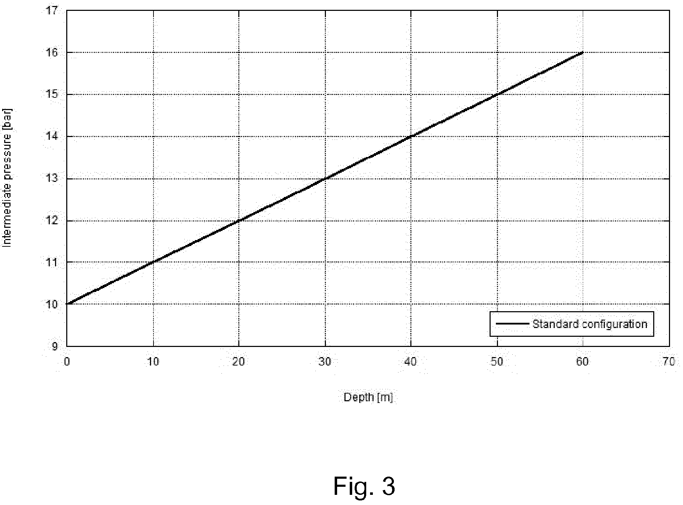

Fig. 3 shows the trend of the intermediate pressure Pi by changing the immersion depth obtained by calibrating the springs such to have a surface pressure of 10 bars (intersection with the ordinate axis).

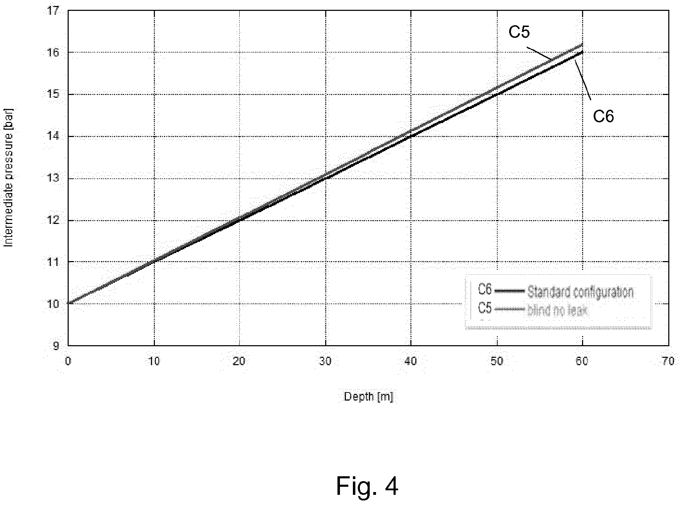

Fig. 4 shows the same curve as Fig. 3 with a superimposed curve obtained with the blind poppet according to the invention, the initial calibration being the same. As expected, the trend is always linear, albeit with a larger slope with a change of 0.2 bars at 60 m.

At the expense of an increment of the line slope, the device according to the invention, in addition to be easier to be implemented, allows compensating for the drawback caused by the leakage from the O-ring 5 in the conventional poppets. In the latter, in fact, a high-pressure leakage in the guide opening of the poppet stem results in direct passage of high pressure to the intermediate pressure chamber, with following malfunction of the second stage as already described.

In the device according to the invention the high-pressure leakage in the guide opening 501 results in an increase in the force tending to close the valve (Px passes from 0 to $P_H$), which increase is compensated by a reduction of the intermediate pressure thus causing a device operation which at most makes breathing a little more difficult, since the contribution by the intermediate pressure to actuate the second stage valve is lacking and therefore the user has to exert a more intense suction action.

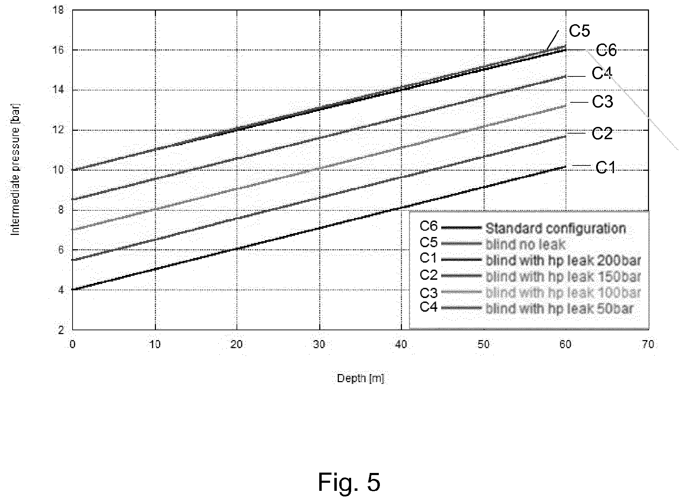

Fig. 5 shows the trend of the intermediate pressure/depth curves with overall leakage of the O-ring 5 for different values of $P_H$. In the situation of very high cylinder pressure, the effort required to the diver can result excessive, but being an emergency situation it is better than the alternative showing in the devices according to known art and consisting in the uncontrolled gas leak. Furthermore, in the leakage condition with the device according to the present invention, the diver can help inhaling by pushing on the second stage drain. According to an embodiment, it is still possible, as described, communicating the guide opening 501 with the external environment by providing a release valve which can act automatically or by manual diver actuation.

In the text and drawings a cylindrical geometry is referred to for the high pressure and intermediate pressure chambers and for the reducing valve, this geometry being the most suitable to be obtained by machining. Furthermore, pressurized containers almost always have cylindrical geometry for controlling the strains. However the inventive concepts described and claimed are not limited to said geometry, any type of geometry being possible to be provided for said chambers and said valve, for example chambers with polygonal plan-shape.

The device can be widely varied constructively. For example it can be adapted for a use with any pressure regulating stage also not underwater, such as for example a device for dispensing air or other gases in emergency situations, which provides in its inside a gas pressure reducing valve from high pressure to lower pressure or use pressure, which valve is composed of a valve seat that can be opened or closed by a plunger cut-off.

**Claims**

1. Pressure regulating device, such as a first diaphragm stage for underwater use, the device comprising:

      - a body provided with an inlet (311) connected to a breathable high pressure gas source and an outlet (312) for the breathable gas having pressure lower than the input gas pressure, said body being partitioned into at least one high-pressure gas chamber (301) communicating with said inlet (311), and an intermediate-pressure gas chamber (302) communicating with said outlet (312), and the intermediate-pressure gas chamber (302) being communicating with the high-pressure gas chamber (301) through a pressure reducing valve,
      - said pressure reducing valve comprising a valve seat (313) made on the wall (303) partitioning the high pressure chamber (301) from the intermediate pressure chamber (302) and a cut-off (1) composed of a flared head (102) connected to a stem (101), the flared head cooperating with said valve seat for closing and opening said valve,
      - said cut-off (1) being displaceable in the two directions along the longitudinal axis of the stem inside the high pressure chamber (301) such that the flared head (102) travels to be alternatively detached and moved away from said seat for opening the valve and travels to move closer and in abutment against said valve seat (313) for closing the valve;
      - an elastically deformable diaphragm (2) and that can be elastically prevaricated (401), the diaphragm being exposed to the pressure outside the device and sealingly separates the intermediate pressure chamber from the external environment, the diaphragm controlling a mechanical actuator (6) for pushing the cut-off (1) along the opening direction in addition to the pressure in the intermediate pressure chamber 302,
      **characterized in that**
      - the stem (101) is slidingly and sealingly supported in a guide opening of a wall of the high pressure chamber (501), opposite to the wall provided with said valve seat (313), thanks to a sealing gasket (5), such as an o-ring or the like, said opening (501) not communicating with other parts of the device such that the pressure in said opening is substantially null or however such to not affect the thrust exerted by the cut-off (1) against the valve seat (313), and wherein the cut-off (1) has a blind hole axially crossing the flared head (102) and the stem (101) until a given depth such as to create a housing seat of a thrust shaft (6) constituting said mechanical actuator.

2. Device according to claim 1, wherein in the high pressure chamber (301) there is an elastic element (500) acting on the cut-off (1) to close the valve, while on the mechanical cut-off (6) a deformable diaphragm (2) acts on which in turn a spring (401) and the ambient pressure (Pa) act to open the valve, such that on the cut-off (1) the following forces overall act:

      - the elastic force ($k_1 \cdot X_1$) of the spring (2) of the balancing mechanism;
      - the elastic force ($k_2 \cdot X_2$) of the spring (500) of the high pressure chamber (301);
      - the force due to the high pressure $P_H$ acting on the cut-off head ($P_H \cdot (A_3'-A_3)$) ;
      - the force due to the intermediate pressure acting on the diaphragm ($Pi \cdot (A_2-A_4)$) ;
      - the force due to the intermediate pressure acting on the flared head (102) of the cut-off ($Pi \cdot (A_3'-A_4)$) ;
      - the force due to the ambient pressure acting on the diaphragm ($Pa \cdot A_2$).

3. Device according to claim 2, wherein the valve seat (313) and the head (102) of the cut-off (1) have such size and shape to minimize the force exerted by the high pressure on the cut-off (1).

4. Device according to one or more of the preceding claims, wherein there is a relief valve communicating a chamber formed by the guide opening (501) with the external environment.

5. Device according to claim 4, wherein the relief valve is an automatic valve calibrated to open when the pressure inside the guide opening (501) is higher than a given threshold.

6. Device according to claim 4 or 5, wherein the relief valve can be manually operated such to reduce the pressure exerted on the cut-off to close the valve when the sealing gasket (5) causes a high-pressure leakage in the guide opening (501).


**Patentansprüche**

1. Druckregelvorrichtung, wie eine erste membrangesteuerte Stufe für den Unterwassereinsatz, wobei die Vorrichtung umfasst:

- einen Körper, der einen mit einer atembare Hochdruckgasquelle verbundenen Einlass (311) und einen Auslass (312) für das atembare Gas mit einem gegenüber dem Eingangsgasdruck niedrigeren Druck aufweist, wobei der Körper in mindestens eine Hochdruckgaskammer (301), die mit dem Einlass (311) in Verbindung steht, und eine Mitteldruckgaskammer (302), die mit dem Auslass (312) verbunden ist, unterteilt ist und wobei die Mitteldruckgaskammer (302) über ein Druckreduzierventil mit der Hochdruckgaskammer (301) in Verbindung steht,
- wobei das Druckreduzierventil einen Ventilsitz (313), der an der die Hochdruckkammer (301) von der Mitteldruckkammer (302) trennenden Wand (303) ausgebildet ist, und ein Absperrelement (1) aufweist, das aus einem aufgeweiteten Kopf (102) besteht, der mit einem Schaft (101) verbunden ist, wobei der aufgeweitete Kopf mit dem Ventilsitz zusammenwirkt, um das Ventil zu schließen und zu öffnen,
- das Absperrelement (1) in den beiden Richtungen entlang der Längsachse des Schafts innerhalb der Hochdruckkammer (301) verschiebbar ist, so dass der aufgeweitete Kopf (102) wechselweise einen Löse- und Entfemungshub weg von dem Sitz zum Öffnen des Ventils und einen Annäherungs- und Anschlaghub gegen den Ventilsitz (313) zum Schließen des Ventils ausführt;
- eine elastisch verformbare Membran (2), die elastisch vorspannbar (401) ist, wobei die Membran dem Druck außerhalb der Vorrichtung ausgesetzt ist und die Mitteldruckkammer dichtend von der Außenumgebung trennt, wobei die Membran einen mechanischen Aktuator (6) zum Drücken des Absperrelements (1) entlang der Öffnungsrichtung zusätzlich zu dem Druck in der Mitteldruckkammer 302,
**dadurch gekennzeichnet, dass**
- der Schaft (101) in einer Führungsöffnung einer gegenüber der mit dem Ventilsitz (313) versehenen Wand liegenden Wand der Hochdruckkammer (501) mittels einer Dichtungsdichtung (5), wie einem O-Ring oder dergleichen, dichtend verschiebbar ist, wobei die Öffnung (501) nicht mit anderen Teilen der Vorrichtung in Verbindung steht, so dass der Druck in der Öffnung im Wesentlichen Null ist oder aber derart ist, dass sie den durch das Absperrelement (1) auf den Ventilsitz (313) ausgeübten Druck nicht beeinflusst, und wobei das Absperrelement (1) ein den aufgeweiteten Kopf (102) und den Schaft bis zu einer gegebenen Tiefe axial durchsetzendes Sackloch (101) aufweist, um einen Aufnahmesitz einer den mechanischen Aktuator bildenden Schubwelle (6) auszubilden.

2. Vorrichtung nach Anspruch 1, wobei in der Hochdruckkammer (301) ein elastisches Element (500) vorhanden ist, das zum Schließen des Ventils auf das Absperrelement (1) einwirkt, während auf das mechanische Absperrelement (6) eine verformbare Membran (2) wirkt, auf die wiederum eine Feder (401) und der Umgebungsdruck (Pa) einwirken, um das Ventil zu öffnen, so dass auf das Absperrelement (1) insgesamt folgende Kräfte wirken:

- die elastische Kraft ($k_1 \cdot X_1$) der Feder (2) des Ausgleichsmechanismus;
- die elastische Kraft ($k_2 \cdot X_2$) der Feder (500) der Hochdruckkammer (301);
- die Kraft ($P_H \cdot (A_3'-A_3)$) aufgrund des auf den Absperrelementenkopf wirkenden Hochdrucks PH;
- die Kraft ($Pi \cdot (A_2-A_4)$) aufgrund des auf die Membran wirkenden Zwischendrucks;
- die Kraft ($Pi \cdot (A_3'-Ä_4)$) aufgrund des auf den aufgeweiteten Kopf (102) des Absperrelementes wirkenden Zwischendrucks;
- die Kraft ($Pa \cdot A_2$) aufgrund des auf die Membran wirkenden Umgebungsdrucks.

3. Vorrichtung nach Anspruch 2, wobei der Ventilsitz (313) und der Kopf (102) des Absperrelementes (1) eine derartige Größe und Form aufweisen, dass die durch den hohen Druck auf das Absperrelement (1) ausgeübte Kraft minimiert wird.

4. Vorrichtung nach einem oder mehreren der vorhergehenden Ansprüche, wobei ein Überströmventil vorgesehen ist, das eine von der Führungsöffnung (501) gebildete Kammer mit der Außenumgebung verbindet.

5. Vorrichtung nach Anspruch 4, wobei das Überströmventil ein automatisches Ventil ist, das so kalibriert ist, dass es öffnet, wenn der Druck innerhalb der Führungsöffnung (501) höher als ein vorgegebener Schwellenwert ist.

6. Vorrichtung nach Anspruch 4 oder 5, wobei das Überströmventil zur Verringerung des auf das Absperrelement ausgeübten Druckes manuell betätigbar ist, um das Ventil zu schließen, wenn die Verschlussdichtung (5) einen hohen Druckverlust in der Führungsöffnung (501) bewirkt.

**Revendications**

1. Dispositif de régulation de pression, tel qu'un premier étage à membrane pour utilisation sous-marine, le dispositif comprenant:

- un corps muni d'une entrée (311) connectée à une source de gaz respirable à haute pression et d'une sortie (312) pour le gaz respirable ayant une pression inférieure à la pression du gaz d'entrée, ledit corps étant divisé en au moins une chambre à gaz à haute pression (301) communiquant avec ladite entrée (311), et une chambre à gaz à pression intermédiaire (302) communiquant avec ladite sortie (312), et la chambre à gaz à pression intermédiaire (302) communiquant avec la chambre à gaz à haute pression (301) à travers une valve de réduction de pression,
- ladite valve de réduction de pression comprenant un siège de valve (313) réalisé sur la paroi (303) séparant la chambre à haute pression (301) de la chambre à pression intermédiaire (302) et une soupape (1) composée d'une tête évasée (102) reliée à une tige (101), la tête évasée coopérant avec ledit siège de valve pour fermer et ouvrir ladite valve,
- ladite soupape (1) pouvant être déplacée dans les deux sens le long de l'axe longitudinal de la tige à l'intérieur de la chambre à haute pression (301) de sorte que la tête évasée (102) se déplace pour alternativement se détacher et s'éloigner dudit siège pour ouvrir la valve et se déplace pour se rapprocher et en butée contre ledit siège de valve (313) pour fermer la valve;
- un diaphragme élastiquement déformable (2) et pouvant être élastiquement franchi (401), le diaphragme étant exposé à la pression à l'extérieur du dispositif et séparant de manière étanche le diaphragme intermédiaire commandant un actionneur mécanique (6) pour pousser la soupape (1) le long d'un sens d'ouverture en plus de la pression dans la chambre à pression intermédiaire (302), **caractérisé en ce que**
- la tige (101) est supportée de manière coulissante et étanche dans une ouverture de guidage d'une paroi de la chambre à haute pression (501), opposée à la paroi munie dudit siège de valve (313), grâce à un joint d'étanchéité (5), tel qu'un joint O-ring ou analogue, ladite ouverture (501) ne communiquant pas avec d'autres parties du dispositif, de sorte que la pression dans ladite ouverture soit sensiblement nulle ou ne permette toutefois pas d'affecter la poussée exercée par la soupape (1) contre le siège de la valve (313), et dans lequel la soupape (1) présente un trou borgne traversant axialement la tête évasée (102) et la tige (101) jusqu'à une profondeur donnée de manière à créer un siège de logement pour un arbre de poussée (6) constituant ledit actionneur mécanique.

2. Dispositif selon la revendication 1, dans lequel, dans la chambre à haute pression (301), il y a un élément élastique (500) agissant sur la soupape (1) pour fermer la valve, tandis qu'un diaphragme déformable (2) agit sur la soupape mécanique (6) et sur lequel agissent à leur tour un ressort (401) et la pression ambiante (Pa) pour ouvrir la valve, de sorte que les forces suivantes agissent globalement sur la soupape (1):

- la force élastique $(k_1 \cdot X_i)$ du ressort (2) du mécanisme d'équilibrage;
- la force élastique $(k_2 \cdot X_2)$ du ressort (500) de la chambre à haute pression (301);
- la force due à la haute pression Ph agissant sur la tête de soupape $(P_H \cdot (A_3' - A_3))$;
- la force due à la pression intermédiaire agissant sur le diaphragme $(Pi \cdot (A_2 - A_4))$;
- la force due à la pression intermédiaire agissant sur la tête évasée (102) de la soupape $(Pi \cdot (A_3' - A_4))$;
- la force due à la pression ambiante agissante sur le diaphragme $(Pa \cdot A_2)$.

3. Dispositif selon la revendication 2, dans lequel le siège de valve (313) et la tête (102) de la soupape (1) ont une dimension et une forme permettant de minimiser la force exercée par la haute pression sur la soupape (1).

4. Dispositif selon l'une ou plusieurs des revendications précédentes, dans lequel une valve de décharge met une chambre formée par l'ouverture de guidage (501) en communication avec l'environnement extérieur.

5. Dispositif selon la revendication 4, dans lequel la valve de décharge est une valve automatique calibrée pour s'ouvrir lorsque la pression à l'intérieur de l'ouverture de guidage (501) est supérieure à un seuil donné.

6. Dispositif selon la revendication 4 ou 5, dans lequel la valve de décharge peut être actionnée manuellement de manière à réduire la pression exercée sur la soupape pour fermer la valve lorsque le joint d'étanchéité (5) provoque une fuite sous haute pression dans l'ouverture de guidage (501).

Fig.1

Fig. 2

Fig. 3

Fig. 4

Fig. 5

**EP 3 434 579 B1**

## REFERENCES CITED IN THE DESCRIPTION

**Patent documents cited in the description**

- FR 2774062